Europäisches Patentamt

European Patent Office

Office européen des brevets

(11) Publication number: **0 224 647**
**A1**

## (12) EUROPEAN PATENT APPLICATION

(21) Application number: **86110525.2**

(22) Date of filing: **30.07.86**

(51) Int. Cl.4: **F16K 5/14** , F16K 5/18

(30) Priority: **31.07.85 FI 852968**

(43) Date of publication of application:
**10.06.87 Bulletin 87/24**

(84) Designated Contracting States:
**AT BE CH DE FR GB IT LI NL SE**

(71) Applicant: **Levent Oy**
**Wärtsilänkatu 88**
**SF-04400 Järvenpää(FI)**

(72) Inventor: **Lehtinen, Uuno**
**c/o Levent Oy Wärtsilänkatu 88**
**F-04400 Järvenpää(FI)**
Inventor: **Lehtinen, Kari**
**c/o Levent Oy Wärtsilänkatu 88**
**F-04400 Järvenpää(FI)**

(74) Representative: **Grams, Klaus Dieter, Dipl.-Ing.**
**et al**
**Patentanwaltsbüro Tiedtke-Bühling-Kinne-**
**Grupe-Pellmann-Grams-Struif Bavariaring 4**
**D-8000 München 2(DE)**

(54) Closing mechanism in a shut-off valve.

(57) A closing mechanism for a shut-off valve, comprising a valve housing (2), with passage port(s) (1), cover (3), bottom (4) and inner surface (5) and passage port closing member(s) (6) with turning shaft (7) and with a tension spring (8) disposed to rest against the turning shaft and against the bottom of the valve housing. As taught by the invention, the closing member (6) is carried freely resting against the tension spring (8) and disposed between the bottom and cover of the valve housing to be substantially immovable in the direction of the turning shaft.

Fig.1

# CLOSING MECHANISM IN A SHUT-OFF VALVE

The present invention concerns a closing mechanism for a shut-off valve as defined in the introductory part of claim 1.

In the foodstuff industry stringent requirements are imposed on valves, particularly regarding cleanability in the valves and their hygienic standard, in addition to usual structural and quality requirements. The state of art and most recent developments in this field are represented by the Finnish Patent No. 59293 and the Finnish application print No. 762825; these disclose a valve provided with a turnable closing member. The valve comprises a valve housing provided with at least two passage ports; and at least one member for closing said passage ports, with a turning shaft, said shaft being turnably carried in the valve housing and sealed thereagainst. The valves advantageously comprise an elastic part having the shape of a semi-arc or a circle to which the closing member, or closing members, have been attached and which rests against a supporting shaft disposed in the bottom of the valve housing, in such manner that the closing member can be shifted from one passage port to the other, or from one set of ,passage ports to other passage ports, or to lie on the side thereof, by rotation effected with the turning shaft, while the closing member presses, under radial and adjustable pressure from the elastic part, against the inner surface of the valve housing.

When the highest degree of hygienic performance and cleanability of the means is being aimed at, the state of art is embarrassed by inconvenient disassembly and washing of the means because the internal components of the means include a spindle, closing members and junctions between them, these tending to collect impurities and being difficult to clean scrupulously.

It is a further drawback of closing mechanisms of prior art that the pressing force acting on the closing member is applied at one single point, with the consequence that the sealing component of the closing member suffers bending and deformation along with the pressure. Hereby the closing member is likely to bind in the passage port or, at least, opening the valve becomes difficult; in addition, in this case the sealing component may be broken and rendered unfit for use.

The object of the invention is to eliminate the drawbacks mentioned. In particular, it is an object of the invention to present a valve closing mechanism which only contains simple and smooth-surfaced parts which are easy to clean and easy to disassemble and reassemble, whereby remarkable savings in manufacturing and servicing costs are also achieved.

Reference is made to the Claims section regarding the characteristic features of the invention.

The invention relates to a shut-off valve comprising a valve housing provided with at least two passage ports, said housing comprising a valve housing cover and bottom and, between these, the inner surface of the valve housing. Furthermore, the valve comprises at least one closing member for the passage ports and a closing member turning shaft, and a tension spring, advantageously of curved shape, substantially unturnably joined with the turning shaft, whereby the passage port can be closed by turning the turning shaft, while the tension spring urges the closing member against the inner surface of the valve housing. It is an essential feature of the closing mechanism of the invention that it comprises a closing member which is not fixed anywhere: the closing member is disposed freely between the inner surface of the valve housing and the tension spring, the tension spring urging the closing member against the inner surface of the valve housing.

In an advantageous embodiment of the invention, the tension spring exerts pressure on the closing member at two points in a plane perpendicular against the turning shaft and located at a distance from each other. Said points are for instance spaced wider than the diameter of the passage port, in which case the pressure from the tension spring acting on the closing member will be directed against the marginal areas of the passage port and not on the aperture. This enables higher pressing forces to be employed on the tension spring than before, whereby the sealing characteristics of the closing mechanism are improved. Since the closing member is disposed tightly, in the horizontal direction, between the inner surface of the valve housing and the tension spring and, in the vertical direction, between the cover and bottom of the valve housing, it cannot move freely in its available space even though it has no attachments anywhere. When the tension spring is urged against the closing member at not less than two points, as described, the closing member will move in the valve housing as the tension spring moves as a result of its attachment to the turning shaft.

In an advantageous embodiment of the invention, with the closing member composed of a supporting part and a sealing part attached to the supporting part, the substantially planar surface of the supporting part facing the tension spring comprises in the centre of this surface a boss, and on the margins of the surface a circular annular eminence, whereby the tension spring abuts on the closing member both at the boss and at the eminence, on both sides of the boss. The diameter of said circular eminence is preferably larger that the diameter of the passage port, in which case the pressure acting on the eminence will act on the closing member mainly on the margins of the passage port, not over the aperture itself at the central boss, whereby the force urging the closing member will be uniform, maintaining the closing member straight and unbent.

The closing mechanism of the invention is equally applicable in a valve housing design with one closing member as in one having two closing members. When two closing members are used, the tension spring advantageously consist of one integral, smooth-surfaced cylindrical part which rests, without any fixed attachment, on opposite sides against two closing members, and against the bottom of the valve housing, being attached substantially unturnably only to the turning shaft, and all other portions of the tension spring being smooth surfaces, without any holes, shoulders or bosses.

When one closing member is being used, the closing member advantageously consists of one smooth-surfaced part substantially shaped like one half of a cylinder and resting substantially fixedly and substantially unturnably only against the turning shaft. The part of the tension spring's surface resting against the closing member is a smooth-surfaced part of the cylinder mantle, and the lower part of the spring advantageously comprises in the centre of the lower margin a round-shaped notch by which the tension spring rests against a pin-like supporting member in the bottom of the valve housing, advantageously conical in shape, and which advantageously is part of a tensioning mechanism of the tension spring, known in itself in the art.

The advantage of the invention over prior art is the simple and clear-cut design of the closing mechanism, which presents no grooves or recesses which would collect dirt, whereby it is easy to keep the mechanism clean. Moreover, maintenance is made easy because the parts are loose in relation to each other, whereby replacement of parts causes no trouble. Also a significant advantage is the uniform pressure of the tension spring against the closing member, whereby the sealing material of the closing member better retains its shape and will not be pressed into the passage port event if it should remain in one and the same position over prolonged periods, nor has the closing member any great tendency to bind in its position.

In the following, the invention is described in detail with reference to the attached drawing, wherein

Fig. 1 presents a shut-off valve closing mechanism according to the invention, in elevational view and partly sectioned, and

Fig. 2 presents the section along line II -II in Fig. 1.

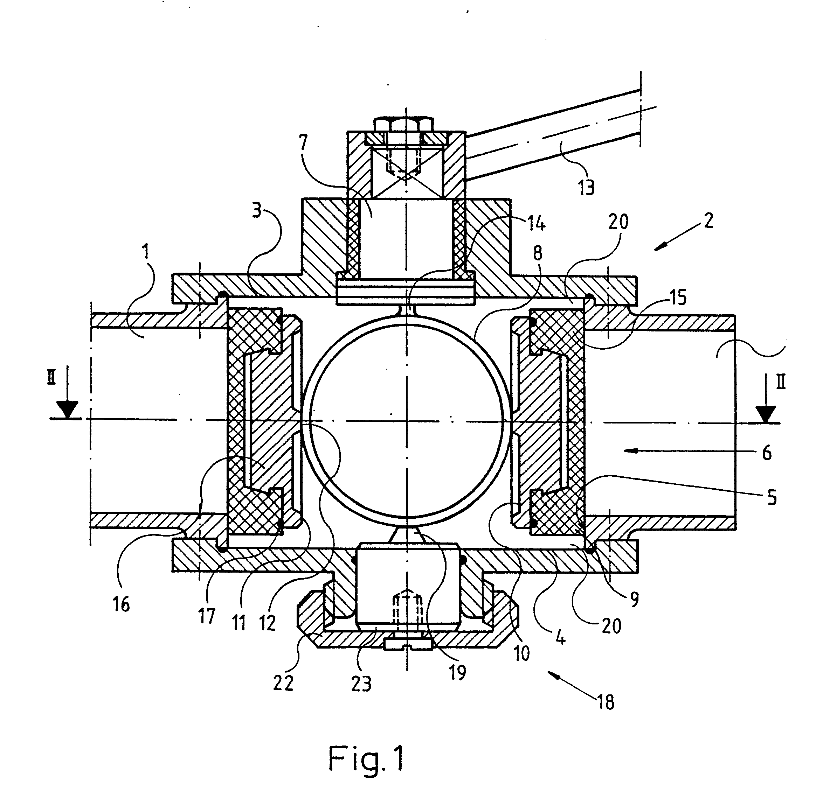

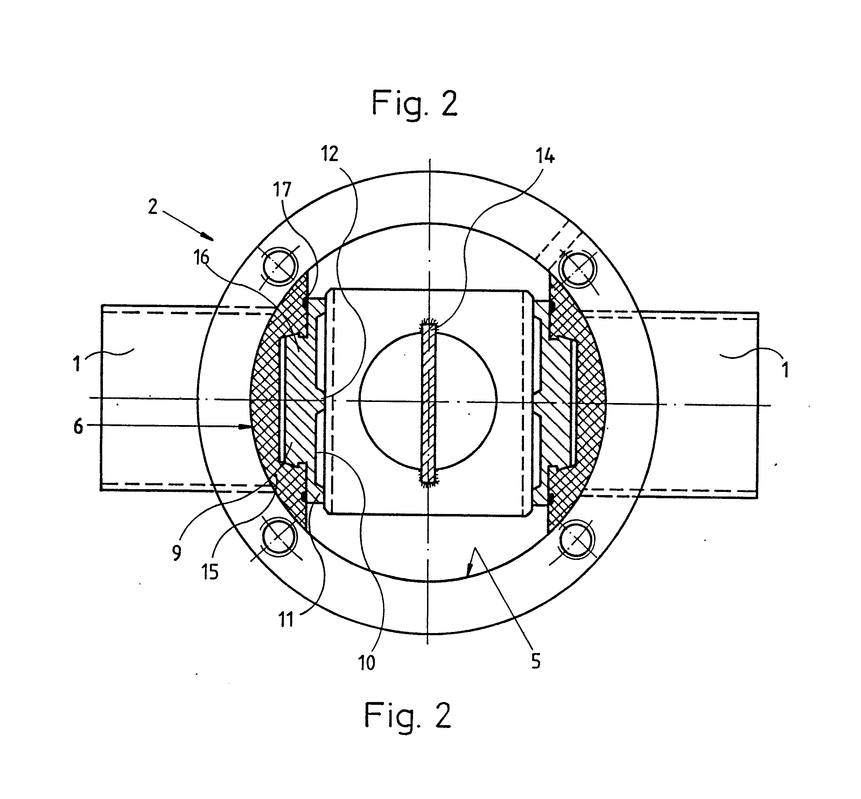

One advantageous embodiment of the closing mechanism of the invention, depicted in Figs 1 and 2, belongs to a shut-off valve known in itself in the art, this valve comprising two passage ports 1 and a valve housing 2, the latter comprising a valve housing cover 3 and bottom 4 and between these the inner surface of the valve housing 5, appropriately a cylindrical surface, part of a spherical surface or of another rotational surface. In the valve housing cover 3 has been pivotally mounted a turning shaft 7, or spindle, with turning means 13 and closing members 6 for closing, respectively opening, the passage ports 6 by turning the turning shaft.

The closing mechanism disposed in the valve housing 2 concists of a tension spring 8 attached to the turning shaft 7 by mediation of a transmitting part 14 and preessing without any fixed attachment against the closing members 6. The closing members 6 are made up of a softer sealing part 15, which seals against the inner surface 5 of the valve housing, and of a more rigid, perferably metallic, body part 16, which has been attached to the sealing part and against which the tension spring leans.

The body part 16 comprises a circular flange structure 19, its surface 10 facing the tension spring 8 comprising a boss 12 located in the centyre of the surface and an annular circular eminence 11 conforming to the circular margin of the surface, the tension spring 8 resting against the boss 12 and on either side of the boss, against the eminence 11, the width of the tension spring being somewhat greater than the diameter of the eminence on the circular flange structure. Hereby, both closing members 6 are supported by the tension spring 8 at least at two points which are not in a plane placed to pass through the axis 7, that is, the points of support lie advantageously in a plane positioned at right angles to the axis 7.

The sealing part 15 and the body part 16 have been firmly fixed to each other. Moreover, between them, in the vicinity of the point where the edges meet, has been placed a sealing ring 17, which makes sure that no impurities can enter between the sealing part and the body part.

The tension spring 8 moreover rests against a tensioning mechanism 18, known in itself in the art, provided in the bottom 4 of the valve housing 2, against the pin-like member 19 on its end. This support is appropriately with the pin-like member against the outer surface of the tension spring and possibly without any bosses, notches, pins or the like. By tensioning with the aid of the tensioning mechanism the tension spring 8 in the direction of the shaft 7, it becomes possible to adjust the tightness of the valve by regulating the pressure of the closing members 6 against the inner surface 5 of the valve housing 2.

The shape of the sealing parts 15 has been designed to be such that they press tightly against the inner surface 5 of the valve housing, the outer surface of the sealing part having a shape conforming to the inner surface of the valve housing. Furthermore, the sealing part 15 has been disposed between the cover 3 and bottom 4 of the valve housing to be substantially immovable in the direction of the turning shaft 7. Hereby, the sealing part 15 is only separated from the cover 3 and from the bottom 4 by a small gap 20, which enables the sealing part to be moved along the inner surface 5 but inhibits any larger movements of the sealing part in the direction of the turning shaft 7. Therefore, the tension spring 8 will rest uniformly and firmly, in any conditions, against the boss 12 and eminence 11 of both closing members 16 even though the spring is in no way affixed to these parts.

The essential feature of the closing mechanism of the invention presented in the foregoing is the simple and uncomplicated form of the tension spring and the circumstance that it has not been attached to the closing members, and that it rests against the closing members at least at two points of support lying at a distance from each other and perferably in a plane perpendicular against the turning shaft, and that the structure is tight, whereby turning the closing members with the aid of a tension spring not affixed to them is possible. Similarly characteristic is the wide spread of the tension and pressure directed on the closing members 6, whereby the sealing parts 15 better retain their shape and the valve is not as susceptible to binding as is the case in existing means.

In Fig. 1, the tensioning pin 19 of the tensioning mechanism 18 has been attached to the bottom of the valve housing in a way allowing it to be regulated in the direction of the turning shaft 7. The tensioning pin is adjusted with the aid of a cover 22 attached with threads to the bottom, the tensioning pin resting against this cover over a spring element 23 or, for instance, a helical spring or a cup spring, in order to prevent inadvertent rotation of the tensioning pin.

The invention has been described in the fore going by referring to a certain advantageous embodiment of the invention. However, this does not in any way restrict the invention: different embodiments of the invention may vary within the inventive idea set forth in the claims.

**Claims**

1. A closing mechanism for a shut-off valve, comprising a valve housing (2) provided with at least two passage ports (1), to said valve housing belonging a valve housing cover (3) and bottom - (4) and between these the inner surface (5) of the valve housing; at least one passage port closing member (6); a closing member turning shaft (7), and a tension spring (8), preferably of curved shape and attached substantially unturnably to the turning shaft, the passage port being closable by the aid of the closing member by turning the turning shaft while the tension spring urges the closing member against the inner surface (5) of the valve housing (2), **characterized** in that the mechanism comprises a closing member freely resting against the tension spring (8) and against the inner surface (5) of the valve housing (2) and which has been disposed between the bottom (4) and cover (3) of the valve housing to be substantially immovable in the direction of the turning shaft (7).

2. Closing mechanism according to claim 1, **characterized** in that the closing member (6) rests freely against the tension spring (8) at least at two points on a plane perpendicular against the turning shaft (7) and spaced from each other.

3. Closing mechanism according to claim 1 or 2, **characterized** in that the tension spring (8) consists of one integral, smooth-surfaced part having mainly the shape of a half-cylinder and resting without fixing against the closing member (6) and the bottom (4) of the valve housing.

4. Closing mechanism according to claim 1 or 2, **characterized** in that the tension spring (8) consists of one integral, smooth-surfaced part having mainly the shape of a cylinder and resting without fixing against two closing members (6) on opposite sides of the tension spring (8) and against the bottom (4) of the valve housing (2).

5. Closing mechanism according to any one of claims 1 -4, **characterized** in that the closing member (6) comprises an advantageously circularly shaped annular flange structure (9) of which the surface (10) resting against the tension spring - (8) comprises on the margin of the flange structure an annular eminence (11), and in the centre of the surface a boss (12), the tension spring (8) resting against said boss and against said eminence on both sides of the boss.

Fig.1

# Fig. 2

Fig. 2

| | DOCUMENTS CONSIDERED TO BE RELEVANT | | EP 86110525.2 |
|---|---|---|---|
| Category | Citation of document with indication, where appropriate, of relevant passages | Relevant to claim | CLASSIFICATION OF THE APPLICATION (Int. Cl.4) |
| D,A | <u>FI - B - 59 293</u> (U.J. LEHTINEN) <br> * Page 3, line 22 - page 4, line 12; fig. 1,2 * <br> -- | 1 | F 16 K 5/14 <br> F 16 K 5/18 |
| A | <u>DE - C - 669 834</u> (PARKER) <br> * Claims 1-4; fig. 1-9 * <br> -- | 1-5 | |
| A | <u>DE - A1 - 3 426 909</u> (MAPEGAZ- -REMATI S.A.) <br> * Fig. 1,4,5 * <br> -- | 1,5 | |
| A | <u>DE - C - 712 458</u> (AUERGES. AKT. GES.) <br> * Totality * <br> ---- | 1 | |
| | | | TECHNICAL FIELDS SEARCHED (Int. Cl.4) <br><br> F 16 K 3/00 <br> F 16 K 5/00 |

The present search report has been drawn up for all claims

| Place of search | Date of completion of the search | Examiner |
|---|---|---|
| VIENNA | 09-03-1987 | ROUSSARIAN |